# EUROPÄISCHE PATENTANMELDUNG

(11) **EP 4 524 662 A1**
(43) Veröffentlichungstag der Anmeldung: **19.03.2025**
(21) Anmeldenummer: 24199244.5
(22) Anmeldetag: 09.09.2024
(51) Int. Cl.: G05B 19/042, G05B 19/408

(54) **DATENSCHNITTSTELLENVORRICHTUNG ZUM AKTUALISIEREN VON STEUERUNGSPROGRAMMEN, UPDATE-SYSTEM, FERTIGUNGSSYSTEM, VERFAHREN ZUM AKTUALISIEREN VON STEUERUNGSPROGRAMMEN UND VERFAHREN ZUM STEUERN EINER NUMERISCH GESTEUERTEN WERKZEUGMASCHINE**

(30) Priorität: 12.09.2023 DE 102023124562
(71) Anmelder: DMG MORI Digital GmbH, 33689 Bielefeld (DE)
(72) Erfinder: PULS, Henrik, 20099 Hamburg (DE); AMES, Stefan, 33818 Leopoldshöhe (DE); WEISS, Christoph, 86989 Steingaden (DE)
(74) Vertreter: MERH-IP Matias Erny Reichl Hoffmann Patentanwälte PartG mbB

(57) **Zusammenfassung**

Die Erfindung stellt eine Datenschnittstellenvorrichtung 100 zum Aktualisieren von Steuerungsprogrammen einer Steuervorrichtung 200a, 200b einer numerisch gesteuerten Werkzeugmaschine bereit, die ein erstes Schnittstellenmodul 10, das zur Datenübertragung mit einer Steuerungsprogrammdatenbank 300 eingerichtet ist, und ein zweites Schnittstellenmodul 20, das zur Datenübertragung mit einer oder mehreren Steuervorrichtungen 200a, 200b eingerichtet ist, umfasst. Die Datenschnittstellenvorrichtung 100 ist eingerichtet, über das erste Schnittstellenmodul 10 einen Aktualisierungsdatensatz von der Steuerungsprogrammdatenbank 300 zu empfangen und über das zweite Schnittstellenmodul 20 einen Konfigurationsdatensatz an eine Steuervorrichtung 200a, 200b zu übertragen, der diese dazu veranlasst, ein in einer Speichereinheit der Steuervorrichtung 200a, 200b abgespeichertes Steuerungsprogramm auf Basis des übermittelten Konfigurationsdatensatzes zu aktualisieren. Die Datenschnittstellenvorrichtung 100 ist zum Aktualisieren von Steuerungsprogrammen von zumindest zwei unterschiedlichen Steuervorrichtungen 200a, 200b eingerichtet und umfasst dazu ein Verarbeitungsmodul, das eingerichtet ist, auf Basis eines empfangenen Aktualisierungsdatensatzes zumindest einen ersten Konfigurationsdatensatz, der durch die erste Steuervorrichtung 200a der zumindest zwei Steuervorrichtungen 200a, 200b auslesebar ist, und einen zweiten Konfigurationsdatensatz, der durch die zweite Steuervorrichtung 200b der zumindest zwei Steuervorrichtungen 200a, 200b auslesebar ist, zu generieren.

## Beschreibung

### Technisches Gebiet

Die vorliegende Erfindung betrifft eine Datenschnittstellenvorrichtung zum Aktualisieren von Steuerungsprogrammen, ein Update-System, ein Fertigungssystem, ein Verfahren zum Aktualisieren von Steuerungsprogrammen und ein Verfahren zum Steuern einer numerisch gesteuerten Werkzeugmaschine.

### Hintergrund der Erfindung

Im Bereich der automatisierten Fertigung kommen üblicherweise numerisch gesteuerte Werkzeugmaschinen (NC- oder CNC-Werkzeugmaschinen) zum Einsatz, deren Komponenten von ein oder mehreren Steuervorrichtungen der Werkzeugmaschine angesteuert werden, um ihre jeweilige Funktion im Laufe der Werkstückbearbeitung zu erfüllen.

Auf diese Weise wird eine menschliche Interaktion an der Werkzeugmaschine im Zuge der Werkstückbearbeitung bereits auf ein Minimum reduziert.

Die Hersteller der Werkzeugmaschinen entwickeln dabei die der Steuerung zugrundeliegenden Steuerungsprogramme ständig weiter, um so Programmfehler auszumerzen oder die Steuerung selbst zu verbessern, beispielsweise kann die Steuerung dadurch noch präziser, akkurater, schneller oder energiesparender gemacht werden.

Das Aufspielen des neuen bzw. überarbeiteten Steuerungsprogramms, also das Aktualisieren, erfolgt meist noch durch einen Service-Techniker des Herstellers, der persönlich beim Kunden anreist, was nicht nur unpraktikabel, sondern auch zeit- und kostenintensiv ist. Das händische Aktualisieren der Steuerungsprogramme durch den Kunden selbst scheidet dabei aus, da die Komplexität der Steuervorrichtung(en) der Werkzeugmaschine, eine individuelle Konfiguration des Aktualisierungsvorgangs erfordert.

Um dieses Vorgehen zu verbessern und unter anderem auf einen Vor-Ort-Einsatz eines Service-Technikers verzichten zu können, sind im Stand der Technik Lösungen für eine Online-Update bekannt, bei dem Informationen zu einem neuen Steuerungsprogramm online von einer Datenbank des Herstellers der Werkzeugmaschine bezogen werden und im Anschluss über ein Netzwerk auf den Werkzeugmaschinen bzw. auf deren Steuervorrichtungen aufgespielt werden.

Hierzu ist aus der EP 2 407 841 A2 ein Verfahren zum Aktualisieren mehrerer Werkzeugmaschinen bekannt, bei dem Softwarepakete von einem zentralen Server des Werkzeugmaschinenherstellers übertragen werden.

Dieses Update-System stößt allerdings bei unterschiedlich und kundenindividuell konfigurierten Werkzeugmaschinen schnell an seine Grenzen und bedarf in diesem Fall nach wie vor dem Eingreifen eines Service-Techniker, der für unterschiedliche Werkzeugmaschinen gewisse Konfigurationen und Parameter des Aktualisierungsvorgangs noch händisch einstellen muss.

### Zusammenfassung

Eine Aufgabe der vorliegenden Erfindung ist es daher, eine effizientere Möglichkeit bereitzustellen, mit der die Steuerung von Werkzeugmaschinen stets auf dem neuesten Stand gehalten werden kann, insbesondere um so eine verbesserte Bearbeitungsqualität von Werkstücken umzusetzen.

Zur Lösung dieser Aufgabe wird eine Datenschnittstellenvorrichtung zum Aktualisieren von Steuerungsprogrammen nach Anspruch 1, ein Update-System nach Anspruch 12 und ein Verfahren zum Aktualisieren von Steuerungsprogrammen nach Anspruch 14 sowie ein Fertigungssystem nach Anspruch 13 und ein Verfahren zum Steuern einer Werkzeugmaschine nach Anspruch 15 bereitgestellt.

Die übrigen abhängigen Ansprüche beziehen sich dabei auf bevorzugte Ausführungsformen der Verfahren oder der Werkzeugmaschine, die jeweils für sich genommen oder in Kombination bereitgestellt werden können.

Gemäß eines ersten Aspekts der Erfindung wird eine Datenschnittstellenvorrichtung zum Aktualisieren von Steuerungsprogrammen einer Steuervorrichtung einer numerisch gesteuerten Werkzeugmaschine bereitgestellt, die ein erstes Schnittstellenmodul, das zur Datenübertragung mit einer Steuerungsprogrammdatenbank eingerichtet ist, und ein zweites Schnittstellenmodul, das zur Datenübertragung mit einer oder mehreren Steuervorrichtungen eingerichtet ist, umfasst. Die Datenschnittstellenvorrichtung ist eingerichtet, über das erste Schnittstellenmodul einen Aktualisierungsdatensatz von der Steuerungsprogrammdatenbank zu empfangen und über das zweite Schnittstellenmodul einen Konfigurationsdatensatz an eine Steuervorrichtung zu übertragen, der diese dazu veranlasst, ein in einer Speichereinheit der Steuervorrichtung abgespeichertes Steuerungsprogramm auf Basis des übermittelten Konfigurationsdatensatzes zu aktualisieren. Die Datenschnittstellenvorrichtung ist zum Aktualisieren von Steuerungsprogrammen von zumindest zwei unterschiedlichen Steuervorrichtungen eingerichtet und umfasst dazu ein Verarbeitungsmodul, das eingerichtet ist, auf Basis eines empfangenen Aktualisierungsdatensatzes zumindest einen ersten Konfigurationsdatensatz, der durch eine erste Steuervorrichtung der zumindest zwei Steuervorrichtungen auslesebar ist, und einen zweiten Konfigurationsdatensatz, der durch eine zweite Steuervorrichtung der zumindest zwei Steuervorrichtungen auslesebar ist, zu generieren.

Auf diese Weise wird eine Datenschnittstellenvorrichtung geschaffen, die unabhängig von hardware- oder softwareseitiger Realisierung einzelner Steuervorrichtungen, ein dortiges Steuerungsprogramm auf Basis eines generischen Aktualisierungsdatensatzes aktualisieren kann.

Die Steuervorrichtungen können hierbei als Steuervorrichtungen separater Werkzeugmaschinen oder als Steuervorrichtung separater Komponenten (Bau- oder Funktionsgruppen) einer einzelnen oder unterschiedlicher Werkzeugmaschinen verstanden werden. Bau- oder Funktionsgruppen können dabei unter anderem Maschinenachsen (Linear, Rund- oder Schwenkachsen), Antriebe für Arbeitsspindeln oder Hilfssysteme, wie beispielsweise eine Kühlschmierstoffversorgung oder ein Prozessüberwachungssystem sein.

Die Datenschnittstellenvorrichtung ist dabei zum Aktualisieren unterschiedlicher Steuervorrichtung geeignet, was bedeutet, dass ein Konfigurationsdatensatz für die erste Steuervorrichtung in der Regel nicht nur die zweite Steuervorrichtung ausgelesen oder ausgeführt werden kann und umgekehrt.

"Unterschiedlich" ist hierbei so zu verstehen, dass die besagten Steuervorrichtungen nicht baugleich sind, sondern auf unterschiedliche Weise implementiert sind und unter Umständen auch gänzliche andere Funktionen in der Werkzeugmaschine übernehmen.

Der Aktualisierungsdatensatz ist als eine Ansammlung elektronisch speicherbarer und übertragbarer Daten zu verstehen, die Informationen zu neuen Steuerungsprogrammen enthalten, beispielsweise zu neuen Einstellungen, Steuerungsalgorithmen etc.

Der Konfigurationsdatensatz für die jeweilige Steuervorrichtung ist als eine Ansammlung elektronisch speicherbarer und übertragbarer Daten zu verstehen, die in der Regel lediglich durch die Art von Steuervorrichtung auslesbar und ausführbar sind, für die der Konfigurationsdatensatz generiert wurde. So können sich die Konfigurationsdatensätze für die unterschiedlichen Steuervorrichtungen in ihrem Datenformat, den enthaltenen Installationsanweisungen sowie deren Reihenfolge, der Programmiersprache und dergleichen unterscheiden.

Jede Steuervorrichtung, unabhängig ob diese als zentrale Steuervorrichtung zur Steuerung der gesamten Werkzeugmaschine vorgesehen ist, oder ob diese als Baugruppen-Steuervorrichtung nur eine einzelne Bau- oder Funktionsgruppe der Werkzeugmaschine steuert, ist üblicherweise je nach Hersteller unterschiedlich umgesetzt.

Beispielsweise und nicht erschöpfend können sich diese in der zu verwendenden Programmiersprache, in der Implementierung des Steuerungsprogramms oder in den Arten der Kommunikationsschnittstellen zur Ansteuerung einzelner Bau - und Funktionsgruppen unterscheiden.

Bisher war es nicht möglich, einen generischen Aktualisierungsdatensatz bereitzustellen, auf Basis dessen Steuerungsprogramme unterschiedlicher Steuervorrichtungen aktualisiert werden konnten. So mussten bis dato zu aktualisierende Komponenten sowie ein zugehöriger Aktualisierungsdatensatz händisch in Abhängigkeit der individuellen Ausstattung einer Werkzeugmaschine ausgewählt werden. Dies ist durch die bereitgestellte Datenschnittstellenvorrichtung nun nicht länger nötig.

Dadurch können Update-Vorgänge ohne Anwesenheit eines Technikers für eine Vielzahl unterschiedlicher Steuervorrichtungen vollautomatisch durchgeführt werden, was die Stillstandzeiten der Werkzeugmaschinen und auch damit verbundene Kosten erheblich reduziert und zudem dafür sorgt, dass stets das aktuellste Steuerungsprogramm auf der Steuervorrichtung vorhanden ist.

Das Verarbeitungsmodul der Datenschnittstellenvorrichtung kann als Teil des ersten und/oder des zweiten Schnittstellenmoduls oder separat von diesen bereitgestellt sein.

Die Schnittstellenmodule und das Datenverarbeitungsmodul sind vorzugsweise als prozessorbasierte Datenverarbeitungsvorrichtungen ausgeführt, die für sich genommene mehrere elektronische Schnittstellen zur Datenübertragung und auch interne Speicher, beispielsweise Arbeitsspeicher, aufweisen können.

Vorzugsweise ist die Datenschnittstellenvorrichtung eingerichtet, über das zweite Schnittstellenmodul mit N weiteren unterschiedlichen Steuervorrichtungen zu kommunizieren, mit N≥1. Die Datenschnittstellenvorrichtung ist in diesem Fall zum Aktualisieren von Steuerungsprogrammen von der ersten und der zweiten sowie von den N weiteren Steuervorrichtungen eingerichtet, wobei das Verarbeitungsmodul eingerichtet ist, auf Basis des empfangenen Aktualisierungsdatensatzes den ersten und zweiten Konfigurationsdatensatz sowie N weitere Konfigurationsdatensätze zu generieren, die durch die jeweiligen Steuervorrichtungen auslesebar sind, und die jeweiligen Konfigurationsdatensätze über das zweite Schnittstellenmodul an die zugehörige Steuervorrichtung zu übertragen.

In einer bevorzugten Ausführungsform ist das zweite Schnittstellenmodul eingerichtet, Bestandsdatensätze von der ersten und/oder von der zweiten Steuervorrichtung zu empfangen, die Informationen zu dem auf der jeweiligen Steuervorrichtung installierten Steuerungsprogramm enthalten, und diese insbesondere in einem Speichermodul der Datenschnittstellenvorrichtung abzuspeichern.

Dadurch kann die Datenschnittstellenvorrichtung vorteilhafterweise als Sammelstelle fungieren, in der alle Informationen zu aktuell auf der ersten und der zweiten Steuervorrichtung installierten Steuerungsprogrammen gesammelt werden.

Der besagte Bestandsdatensatz zu einer der beiden Steuervorrichtungen beinhaltet beispielsweise Informationen zu einer aktuellen Versionsnummer des Steuerprogramms oder einzelner Programmmodule des Steuerungsprogramms, das Datum der letzten Aktualisierung oder eine Auflistung aktuell installierter Programmmodule. Ein Steuerungsprogramm kann dabei mehrere Programmmodule umfassen, die unterschiedliche Funktionalitäten bereithalten. Besagte Programmmodule können dabei nach Belieben dem Steuerungsprogramm hinzugefügt oder entfernt werden, um so die Funktionalitäten der Werkzeugmaschine softwareseitig zu erweitern.

In einer bevorzugten Ausführungsform ist das Verarbeitungsmodul eingerichtet, den ersten und/oder zweiten Konfigurationsdatensatz zusätzlich auf Basis der empfangenen Bestandsdatensätze der zugehörigen Steuervorrichtung zu generieren.

Dadurch wird der Konfigurationsdatensatz anhand des bereits auf der Steuervorrichtung installierten Steuerungsprogramms generiert, um so unnötige Aktualisierungen zu vermeiden und beispielsweise nur diejenigen Programmmodule zu aktualisieren, für die tatsächliche eine neue, verbesserte oder überarbeitete Version in der Steuerungsprogrammdatenbank verfügbar ist.

Ebenso kann auch kein Konfigurationsdatensatz erstellt werden, falls das Steuerungsprogramm einer der Steuervorrichtungen bereits auf dem neuesten Stand ist.

In einer bevorzugten Ausführungsform ist das erste Schnittstellenmodul eingerichtet, den zu empfangenden Aktualisierungsdatensatz an der Steuerungsprogrammdatenbank auf Basis der empfangenen Bestandsdatensätze auszuwählen.

Dadurch kann der für die Aktualisierung geeignetste Aktualisierungsdatensatz heruntergeladen werden, sodass Doppelungen vermieden werden können, was wiederum die Übertragungsgeschwindigkeit erhöht und eine Speicherauslastung der Datenschnittstellenvorrichtung reduziert.

In einer bevorzugten Ausführungsform ist die Steuerungsprogrammdatenbank auf einem separaten Server bereitgestellt und das erste Schnittstellenmodul eingerichtet ist, mit diesem über eine Inter- oder Intranet-Verbindung zu kommunizieren.

Dadurch kann die Steuerungsprogrammdatenbank beispielsweise extern bereitgestellt werden und unabhängig von ihrem Standort eine Vielzahl von Datenschnittstellenvorrichtungen mit entsprechenden Aktualisierungsdatensätzen versorgen.

In einer bevorzugten Ausführungsform ist die Datenschnittstellenvorrichtung teilweise oder ganz cloudbasiert ist, insbesondere ist das Verarbeitungsmodul cloudbasiert.

Dadurch kann die Datenschnittstellenvorrichtung selbst dezentral bereitgestellt werden, sodass rechenleistungsintensive Vorgänge, wie beispielsweise die Generierung der Konfigurationsdatensätze, in der Cloud durchgeführt werden können, die üblicherweise eine höhere Rechenleistung bietet als lokale Datenverarbeitungsvorrichtungen.

In einer bevorzugten Ausführungsform sind die zumindest zwei Steuervorrichtungen Teile der gleichen numerisch gesteuerten Werkzeugmaschine sind und zur Steuerung unterschiedlicher Komponenten der Werkzeugmaschine eingerichtet sind.

In einer bevorzugten Ausführungsform ist die erste Steuervorrichtung Teil einer ersten und die zweite Steuervorrichtung Teil einer zweiten numerisch gesteuerten Werkzeugmaschine.

In einer bevorzugten Ausführungsform enthalten die durch das Verarbeitungsmodul generierten Konfigurationsdatensätze durch die jeweilige Steuervorrichtung ausführbare Installationsanweisungen.

In einer bevorzugten Ausführungsform enthalten die generierten Konfigurationsdatensätze zusätzliche eine elektronische Signatur.

Auf diese Weise kann die Authentizität der Konfigurationsdatensätze an den Steuervorrichtungen sichergestellt werden, um diese beispielsweise zuverlässig von Schadsoftware unterscheiden zu können. So werden beispielsweise die in einem Konfigurationsdatensatz enthaltenen Installationsanweisungen auf den Steuervorrichtungen nur ausgeführt, falls die enthaltene elektronische Signatur einer vorgegebenen bzw. festgelegten Signatur entspricht.

Vorzugsweise enthält auch der Aktualisierungsdatensatz eine elektronische Signatur, wobei insbesondere die elektronischen Signaturen der durch das Verarbeitungsmodul generierten Konfigurationsdatensätze auf Basis der elektronischen Signatur des Aktualisierungsdatensatzes erstellt werden.

Weiter vorzugsweise werden nur Konfigurationsdatensätze erstellt, wenn die die in dem Aktualisierungsdatensatz enthaltene elektronische Signatur einer vorgegebenen bzw. festgelegten Signatur entspricht.

Auf diese Weise kann auch die Gefahr einer über das erste Schnittstellenmodul eingespielten Schadsoftware verhindert werden.

In einer bevorzugten Ausführungsform umfasst die Datenschnittstellenvorrichtung weiterhin ein Eingabemodul zum Erfassen von Nutzereingaben, über das insbesondere ein Aktualisierungsvorgang für ein Steuerungsprogramm einer Steuervorrichtung einleitbar ist.

Dadurch kann ein Aktualisierungsvorgang manuell durch einen Bediener initialisiert werden, um diesen beispielsweise zum bestmöglichen Zeitpunkt durchzuführen, an dem die Werkzeugmaschine nicht benötigt oder nur eine geringe Anzahl an Arbeitsaufträgen durchführen muss.

Vorzugsweise umfasst die Datenschnittstellenvorrichtung ein Zeitmodul, das in regelmäßigen Zeitabständen einen Aktualisierungsvorgang durch die Datenschnittstellenvorrichtung initialisiert. Dadurch wird sichergestellt, dass die Steuerungsprogramm möglichst zeitnah aktualisiert werden, falls eine neuere oder verbesserte Version vorliegt.

Gemäß eines zweiten Aspekts wird Update-System zum Einsatz mit Werkzeugmaschinen bereitgestellt, das zumindest eine Datenschnittstellenvorrichtung nach dem ersten Aspekt oder nach einer von dessen bevorzugten Ausführungen sowie zumindest eine Steuerungsprogrammdatenbank umfasst, die über das erste Schnittstellenmodul der Datenschnittstellenvorrichtung mit dieser zur Datenübertragung gekoppelt ist.

Auf diese Weise wird ein Update-System bereitgestellt, welches die Vorteile der erfindungsgemäßen Datenschnittstellenvorrichtung bietet, um problemlos in bestehende Fertigungssysteme implementiert werden kann.

Vorzugsweise ist die Steuerungsprogrammdatenbank auf einem separaten Server bereitgestellt und kommuniziert mit der Datenschnittstellenvorrichtung über eine Inter- oder Intranet-Verbindung.

Gemäß eines dritten Aspekts wird ein Fertigungssystem bereitgestellt, das zumindest ein Update-System gemäß des zweiten Aspekts und zumindest eine erste und eine zweite Steuervorrichtung umfasst, die unterschiedliche sind und beide über das zweite Schnittstellenmodul der Datenschnittstellenvorrichtung des Update-Systems mit diesem zur Datenübertragung gekoppelt sind.

Auf diese Weise kann ein gesamtes Fertigungssystem mit der vorteilhaften Funktionalität der erfindungsgemäßen Datenschnittstellenvorrichtung bereitgestellt werden, das nun nicht nur zur vollautomatisierten Werkstückbearbeitung, sondern auch zum vollautomaistiersten Aktualisieren der hierfür eingesetzten Steuerungsprogramme eingerichtet ist.

Die erste und die zweite Steuervorrichtung können als Steuervorrichtungen separater Werkzeugmaschinen oder als Steuervorrichtungen separater Komponenten (Bau- oder Funktionsgruppen) einer einzelnen oder unterschiedlicher Werkzeugmaschinen umgesetzt sein.

Dadurch kann insbesondere sichergestellt werden, dass die jeweiligen Steuervorrichtungen stets über die aktuelle Software bzw. das aktuelle Steuerungsprogramm verfügen, das in der Regel im Vergleich zu einer Vorgängerversion eine akkuratere oder energiesparendere oder sogar schnellere Ansteuerung gestattet und so eine effizientere Werkstückbearbeitung erlaubt.

Vorzugsweise umfasst das Update-System eine Vielzahl von Datenschnittstellenvorrichtungen gemäß des ersten Aspekts oder nach einer von dessen bevorzugten Ausführungen, die allesamt mit der Steuerungsprogrammdatenbank gekoppelt sind.

Die Datenschnittstellenvorrichtungen können beispielsweise in unterschiedlichen Werkhallen zum Einsatz kommen und dabei alle über die gleiche Steuerungsprogrammdatenbank mit Aktualisierungsdatensätzen versorgt werden.

Gemäß eines vierten Aspekts wird ein Verfahren zum Aktualisieren von Steuerungsprogrammen einer Steuervorrichtung einer numerisch gesteuerten Werkzeugmaschine, mittels einer Datenschnittstellenvorrichtung bereitgestellt, insbesondere mittels einer Datenschnittstellenvorrichtung gemäß des ersten Aspekts oder einer von dessen bevorzugten Ausführungen, umfassend ein Empfangen eines Aktualisierungsdatensatzes durch eine erstes Schnittstellenmodul der Datenschnittstellenvorrichtung von einer Steuerungsprogrammdatenbank, ein Auswählen zumindest einer zu aktualisierenden Steuervorrichtung aus einer Menge von zumindest zwei unterschiedlichen Steuervorrichtungen, ein Generieren eines Konfigurationsdatensatzes für die ausgewählte Steuervorrichtung, der diese dazu veranlasst, ein in einer Speichereinheit der ausgewählten Steuervorrichtung abgespeichertes Steuerungsprogramm zu aktualisieren, auf Basis des empfangenen Aktualisierungsdatensatzes durch ein Verarbeitungsmodul der Datenschnittstellenvorrichtung, ein Übertragen des generierten Konfigurationsdatensatzes an die ausgewählte Steuervorrichtung mittels eines zweiten Schnittstellenmoduls der Datenschnittstellenvorrichtung; und ein Aktualisieren des Steuerungsprogramms auf der ausgewählten Steuervorrichtung auf Basis des übertragenen Konfigurationsdatensatzes.

Das bereitgestellte Verfahren bietet die Möglichkeit, unabhängig von hardware- oder softwareseitiger Realisierung einzelner Steuervorrichtungen, ein dortiges Steuerungsprogramm auf Basis eines generischen Aktualisierungsdatensatzes zu aktualisieren.

Die weiteren damit verbundenen Vorteile entsprechen im Wesentlichen den bereits im Zuge der Datenschnittstellenvorrichtung beschriebenen Vorteile, weswegen auf eine erneute Wiedergabe an dieser Stelle verzichtet wird. Gleiches gilt für die nachfolgend beschriebenen, bevorzugten Ausführungen des Verfahrens, die im Wesentlichen die verfahrenstechnischen Umsetzungen der bereits beschriebenen vorteilhaften Ausführung der Datenschnittstellenvorrichtung darstellen.

Vorzugsweise umfasst das Verfahren weiterhin ein Empfangen eines Bestandsdatensatzes von der ersten und/oder ein Empfangen eines Bestandsdatensatzes von der zweiten Steuervorrichtung, die jeweils Informationen zu dem auf der jeweiligen Steuervorrichtung installierten Steuerungsprogramm enthalten, mittels des zweiten Schnittstellenmoduls und insbesondere ein Abspeichern dieser in einem Speichermodul der Datenschnittstellenvorrichtung.

Vorzugsweise erfolgt das Generieren des Konfigurationsdatensatzes auf Basis der empfangenen Bestandsdatensätze der zugehörigen, ausgewählten Steuervorrichtung und auf Basis des empfangenen Aktualisierungsdatensatzes

Vorzugsweise umfasst das Verfahren weiterhin ein Auswählen des zu empfangenden Aktualisierungsdatensatz an der Steuerungsprogrammdatenbank auf Basis der empfangenen Bestandsdatensätze über das erste Schnittstellenmodul.

Vorzugsweise umfasst das Verfahren weiterhin ein elektronisches Signieren des generierten Konfigurationsdatensatzes.

Gemäß eines fünften Aspekts wird ein Verfahren zum Steuern einer numerisch gesteuerten Werkzeugmaschine bereitgestellt, umfassend ein Aktualisieren eines Steuerungsprogramms einer Steuervorrichtung der numerisch gesteuerten Werkzeugmaschine mit einem Verfahren gemäß des vierten Aspekts oder einer von dessen bevorzugten Ausführungen, und ein Steuern der Werkzeugmaschine mittels der Steuervorrichtung auf Basis des aktualisierten Steuerungsprogramms.

Auf diese Weise kann eine Werkstückbearbeitung, im Zuge derer die Werkzeugmaschine entsprechend gesteuert wird, bereitgestellt werden, die stets auf Basis eines aktuellen Steuerungsprogramms erfolgt, das in der Regel im Vergleich zu einer Vorgängerversion eine akkuratere oder energiesparendere oder sogar schnellere Ansteuerung gestattet und so eine effizientere Werkstückbearbeitung erlaubt.

Unter dem Steuern der Werkzeugmaschine ist dabei das Steuern einer oder mehrere Aktoren bzw. Komponenten der Werkzeugmaschine zu verstehen, beispielsweise Linear, Rund- oder Schwenkachsen, Antriebe für Arbeitsspindeln oder Hilfssysteme, die auf Basis des Steuerungsprogramms angesteuert werden.

Weitere Aspekte und deren Vorteile als auch speziellere Ausführungsbeispiele der zuvor genannten Aspekte und Ausführungsformen werden im Folgenden unter Zuhilfenahme der in den beigefügten Figuren gezeigten Zeichnungen beschrieben.

Fig. 1 zeigt eine schematische Ansicht eines Ausführungsbeispiels der erfindungsgemäßen Fertigungssystems, welches ein Ausführungsbeispiel eines Update-Systems umfasst, das wiederum ein Ausführungsbeispiel der Datenschnittstellenvorrichtung umfasst.

Fig. 2 zeigt ein schematisches Ablaufdiagramm eines Ausführungsbeispiels des erfindungsgemäßen Verfahrens zum Aktualisieren von Steuerungsprogrammen.

Fig. 3 zeigt ein schematisches Ablaufdiagramm eines Ausführungsbeispiels des erfindungsgemäßen Verfahrens zum Steuern einer Werkzeugmaschine.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Ausführliche Figurenbeschreibung

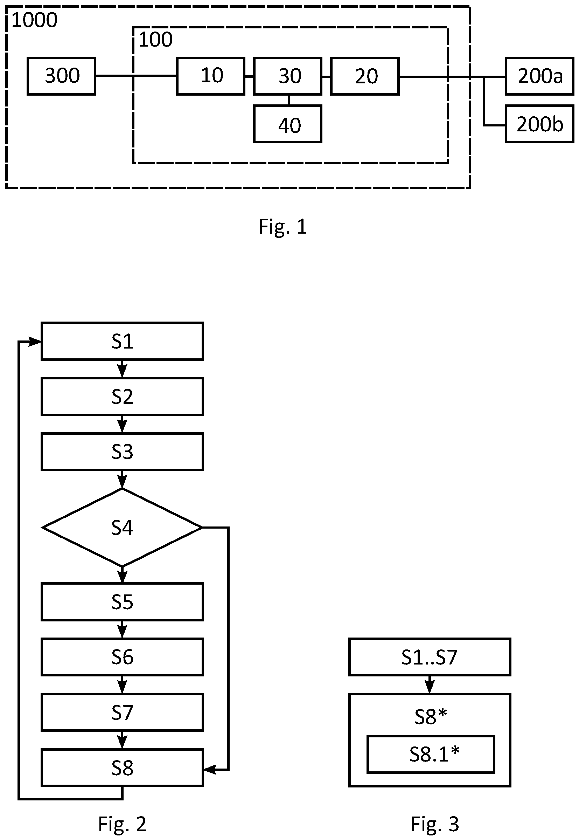

Fig. 1 zeigt eine schematische Ansicht eines Ausführungsbeispiels der erfindungsgemäßen Fertigungssystems, welches ein Ausführungsbeispiel eines Update-Systems 1000 umfasst, das wiederum ein Ausführungsbeispiel der Datenschnittstellenvorrichtung 100 umfasst.

Das Fertigungssystem umfasst das Update-System 1000 und die mit diesem verbundene erste und zweite Steuerungsvorrichtungen 200a, 200b.

Die erste und zweite Steuervorrichtung 200, 200b sind unterschiedlich und können als Steuervorrichtungen separater Werkzeugmaschinen oder als Steuervorrichtungen separater Komponenten (Bau- oder Funktionsgruppen) einer einzelnen oder unterschiedlicher Werkzeugmaschinen umgesetzt sein.

Vorliegend sind die beiden Steuervorrichtungen 200a, 200b Steuervorrichtungen verschiedener Komponenten der selben Werkzeugmaschine.

Das Update-System 1000 umfasst eine Steuerungsprogrammdatenbank 300 und eine Datenschnittstellenvorrichtung 100.

Die Steuerungsprogrammdatenbank 300 ist cloudbasiert und auf einem separaten Server bereitgestellt, der über eine Intranet- oder Internet-Verbindung erreicht werden kann.

Die Datenschnittstellenvorrichtung 100 umfasst hierbei ein erstes Schnittstellenmodul 10, das zur Datenübertragung mit der Steuerungsprogrammdatenbank 300 eingerichtet ist und ein zweites Schnittstellenmodul 20, das mit der ersten und der zweiten Steuervorrichtung 200a, 200b gekoppelt und zur Datenübertragung eingerichtet ist. Ferner umfasst die Datenschnittstellenvorrichtung 1000 ein Verarbeitungsmodul 30, das im vorliegenden Ausführungsbeispiel als separate Komponente ausgeführt ist, aber auch als Teil des ersten oder zweiten Schnittstellenmoduls 10, 20 ausgeführt sein kann.

Die Datenschnittstellenvorrichtung 100 ist eingerichtet, über das erste Schnittstellenmodul 10 einen Aktualisierungsdatensatz von der Steuerungsprogrammdatenbank 300 zu empfangen.

Das Verarbeitungsmodul 30 ist dann eingerichtet, auf Basis des empfangenen Aktualisierungsdatensatzes zumindest einen ersten Konfigurationsdatensatz, der durch die erste Steuervorrichtung 200a auslesebar ist, und einen zweiten Konfigurationsdatensatz, der durch die zweite Steuervorrichtung 200b auslesebar ist, zu generieren.

Ferner ist die Datenschnittstellenvorrichtung 100 eingerichtet, über das zweite Schnittstellenmodul 20 die generierten Konfigurationsdatensätze an die jeweiligen Steuervorrichtungen 200a, 200b zu übertragen, die dort diese jeweils dazu veranlassen, ein in einer Speichereinheit der jeweiligen Steuervorrichtung 200a, 200b abgespeichertes Steuerungsprogramm auf Basis des jeweils übermittelten Konfigurationsdatensatzes zu aktualisieren.

Auf diese Weise bietet die Datenschnittstellenvorrichtung 100 eine Möglichkeit, unabhängig von der individuellen hardware- oder softwareseitigen Realisierung der beiden Steuervorrichtungen 200a, 200b, ein dortiges Steuerungsprogramm auf Basis des generischen Aktualisierungsdatensatzes von der Steuerungsprogrammdatenbank 300 zu aktualisieren.

Bisher war es nicht möglich, einen generischen Aktualisierungsdatensatz bereitzustellen, auf Basis dessen Steuerungsprogramme unterschiedlicher Steuervorrichtungen aktualisiert werden konnten. So mussten bis dato zu aktualisierende Komponenten sowie ein zugehöriger Aktualisierungsdatensatz händisch in Abhängigkeit der individuellen Ausstattung einer Werkzeugmaschine ausgewählt werden. Dies ist durch die bereitgestellte Datenschnittstellenvorrichtung 100 nun nicht länger nötig.

Die Datenschnittstellenvorrichtung 100 umfasst weiterhin ein Eingabemodul 40 zum Erfassen von Nutzereingaben. Dadurch kann ein Bediener einen Aktualisierungsvorgang für ein oder mehrere Steuerungsvorrichtungen 200a, 200b an der Datenschnittstellenvorrichtung 100 manuell einleiten, beispielsweise wenn die zugehörige Werkzeugmaschine gerade nicht benötigt wird.

Fig. 2 zeigt ein schematisches Ablaufdiagramm eines Ausführungsbeispiels des erfindungsgemäßen Verfahrens zum Aktualisieren von Steuerungsprogrammen an einer ersten und/oder einer zweiten Steuerungsvorrichtung einer numerischen Werkzeugmaschine mit Hilfe einer Datenschnittstellenvorrichtung. Die erste und die zweite Steuervorrichtung sind dabei unterschiedlich

In Schritt S1 erfolgt ein Empfangen eines Bestandsdatensatzes von der ersten und ein Empfangen eines Bestandsdatensatzes von der zweiten Steuervorrichtung, die jeweils Informationen zu dem auf der jeweiligen Steuervorrichtung installierten Steuerungsprogramm enthalten, mittels des zweiten Schnittstellenmoduls.

In Schritt S2 erfolgt ein Empfangen eines Aktualisierungsdatensatzes durch ein erstes Schnittstellenmodul der Datenschnittstellenvorrichtung von einer Steuerungsprogrammdatenbank.

In Schritt S3 erfolgt ein Auswählen zumindest einer zu aktualisierenden Steuervorrichtung aus einer Menge von zumindest zwei unterschiedlichen Steuervorrichtungen.

In Schritt S4 erfolgt ein Vergleich des empfangenen Bestandsdatensatzes aus Schritt S1 für die in Schritt S3 ausgewählte Steuervorrichtung mit dem empfangenen Aktualisierungsdatensatz aus Schritt S2.

Für den Fall, dass ein Vergleichsergebnis aus Schritt S4 positiv ausfällt und keine Aktualisierung des Steuerungsprogramms auf der ausgewählten Steuervorrichtung vorgenommen werden muss, folgt Schritt S8. Falls das Vergleichsergebnis allerdings negativ ausfällt, folgt Schritt S5.

In Schritt S5 erfolgt ein Generieren eines Konfigurationsdatensatzes für die in Schritt S3 ausgewählte Steuervorrichtung, der diese dazu veranlasst, ein in einer Speichereinheit der ausgewählten Steuervorrichtung abgespeichertes Steuerungsprogramm zu aktualisieren, auf Basis des empfangenen Aktualisierungsdatensatzes aus Schritt S2 und des empfangenden Bestanddatensatzes für die ausgewählte Steuervorrichtung aus Schritt S1 durch ein Verarbeitungsmodul der Datenschnittstellenvorrichtung.

In Schritt S6 erfolgt ein Übertragen des in Schritt S5 generierten Konfigurationsdatensatzes an die in Schritt S3 ausgewählte Steuervorrichtung mittels eines zweiten Schnittstellenmoduls der Datenschnittstellenvorrichtung.

In Schritt S7 erfolgt ein Aktualisieren des Steuerungsprogramms auf der ausgewählten Steuervorrichtung auf Basis des an diese in Schritt S4 übertragenen Konfigurationsdatensatzes.

In Schritt S8 erfolgt eine Pause vorgegebener Dauer, bevor das Verfahren wieder mit Schritt S1 beginnt.

Durch das Verfahren wird eine vollautomatisierbare Möglichkeit zum Aktualisieren von Steuerungsprogrammen an einer Vielzahl unterschiedlicher Steuervorrichtungen ermöglicht.

In einer alternativen Ausführung werden in Schritt S3 alle mit der Datenschnittstellenvorrichtung gekoppelten Steuervorrichtungen ausgewählt und die nachfolgenden Schritte S4 bis S7 werden für jede Steuervorrichtung entweder in einem parallelisierten oder sequentiellen Ablauf durchgeführt.

Fig. 3 zeigt ein schematisches Ablaufdiagramm eines Ausführungsbeispiels des erfindungsgemäßen Verfahrens zum Steuern einer numerisch gesteuerten Werkzeugmaschine, umfassend ein vorheriges Aktualisieren eines Steuerungsprogramms der Steuervorrichtung der Werkzeugmaschine.

Die Schritte S1 bis S7 entsprechen den Schritten des Aktualisierungsverfahrens aus Fig. 2, im Zuge dessen ein Steuerungsprogramm auf der in Schritt S3 ausgewählten Steuervorrichtung aktualisiert wird.

Nach dem Aktualisierungsverfahren erfolgt in Schritt S8* ein Steuern der Werkzeugmaschine, von der die in Schritt S3 ausgewählten Steuerungsvorrichtung Teil ist, mittels der ausgewählten Steuervorrichtung auf Basis des in Schritt S7 aktualisierten Steuerungsprogramms.

Das Steuern umfasst hierbei zumindest einen Teilschritt S8.1*, in dem ein Ansteuern einer Komponente der Werkzeugmaschine auf Basis von Ausgabewerten des aktualisierten Steuerungsprogramms der in Schritt S3 ausgewählten Steuervorrichtung erfolgt, insbesondere um so einen Bearbeitungsschritt einer Werkstückbearbeitung durch die Werkzeugmaschine umzusetzen.

Auf diese Weise kann eine Werkstückbearbeitung, im Zuge derer die Werkzeugmaschine entsprechend gesteuert wird, bereitgestellt werden, die stets auf Basis eines aktuellen Steuerungsprogramms erfolgt, das in der Regel im Vergleich zu einer Vorgängerversion eine akkuratere oder energiesparendere oder sogar schnellere Ansteuerung gestattet und so eine effizientere Werkstückbearbeitung erlaubt.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Liste der Bezugszeichen

- 10: erstes Schnittstellenmodul
- 20: zweites Schnittstellenmodul
- 40: Verarbeitungsmodul
- 40: Eingabemodul
- 100: Datenschnittstellenvorrichtung
- 200a: erste Steuervorrichtung
- 200b: zweite Steuervorrichtung
- 300: Steuerungsprogrammdatenbank
- 1000: Update-System

## Patentansprüche

1. Datenschnittstellenvorrichtung (100) zum Aktualisieren von Steuerungsprogrammen einer Steuervorrichtung (200a, 200b) einer numerisch gesteuerten Werkzeugmaschine, umfassend:
- ein erstes Schnittstellenmodul (10), das zur Datenübertragung mit einer Steuerungsprogrammdatenbank (300) eingerichtet ist; und
- ein zweites Schnittstellenmodul (20), das zur Datenübertragung mit einer oder mehreren Steuervorrichtungen (200a, 200b) eingerichtet ist;
wobei die Datenschnittstellenvorrichtung (100) eingerichtet ist, über das erste Schnittstellenmodul (10) einen Aktualisierungsdatensatz von der Steuerungsprogrammdatenbank (300) zu empfangen und über das zweite Schnittstellenmodul (20) einen Konfigurationsdatensatz an eine Steuervorrichtung (200a, 200b) zu übertragen, der diese dazu veranlasst, ein in einer Speichereinheit der Steuervorrichtung (200a, 200b) abgespeichertes Steuerungsprogramm auf Basis des übermittelten Konfigurationsdatensatzes zu aktualisieren;
**dadurch gekennzeichnet, dass**
die Datenschnittstellenvorrichtung (100) zum Aktualisieren von Steuerungsprogrammen von zumindest zwei unterschiedlichen Steuervorrichtungen (200a, 200b) eingerichtet ist und dazu ein Verarbeitungsmodul (30) umfasst, das eingerichtet ist, auf Basis eines empfangenen Aktualisierungsdatensatzes zumindest einen ersten Konfigurationsdatensatz, der durch die erste Steuervorrichtung (200a) der zumindest zwei Steuervorrichtungen (200a, 200b) auslesebar ist, und einen zweiten Konfigurationsdatensatz, der durch die zweite Steuervorrichtung (200b) der zumindest zwei Steuervorrichtungen (200a, 200b) auslesebar ist, zu generieren.

2. Datenschnittstellenvorrichtung (100) nach Anspruch 1, **dadurch gekennzeichnet, dass**
das zweiten Schnittstellenmodul (20) eingerichtet ist, Bestandsdatensätze von der ersten und/oder der zweiten Steuervorrichtung (200a, 200b) zu empfangen, die Informationen zu dem auf der jeweiligen Steuervorrichtung installierten Steuerungsprogramm enthalten, und diese insbesondere in einem Speichermodul der Datenschnittstellenvorrichtung (100) abzuspeichern.

3. Datenschnittstellenvorrichtung (100) nach Anspruch 2, **dadurch gekennzeichnet, dass**
das Verarbeitungsmodul (30) eingerichtet ist, den ersten und/oder zweiten Konfigurationsdatensatz zusätzlich auf Basis der empfangenen Bestandsdatensätze der zugehörigen Steuervorrichtung (200a, 200b) zu generieren.

4. Datenschnittstellenvorrichtung (100) nach einem der Ansprüche 2 oder 3, **dadurch gekennzeichnet, dass**
das erste Schnittstellenmodul (10) eingerichtet ist, den zu empfangenden Aktualisierungsdatensatz an der Steuerungsprogrammdatenbank (300) auf Basis der empfangenen Bestandsdatensätze auszuwählen.

5. Datenschnittstellenvorrichtung (100) nach zumindest einem der Ansprüche 1 bis 4, **dadurch gekennzeichnet, dass**
die Steuerungsprogrammdatenbank (300) auf einem separaten Server bereitgestellt ist und das erste Schnittstellenmodul (10) eingerichtet ist, mit diesem über eine Inter- oder Intranet-Verbindung zu kommunizieren.

6. Datenschnittstellenvorrichtung (100) nach zumindest einem der Ansprüche 1 bis 5, **dadurch gekennzeichnet, dass**
die Datenschnittstellenvorrichtung (100) teilweise oder ganz cloudbasiert ist.

7. Datenschnittstellenvorrichtung (100) nach zumindest einem der Ansprüche 1 bis 6, **dadurch gekennzeichnet, dass**
die zumindest zwei Steuervorrichtungen (200a, 200b) Teile der gleichen numerisch gesteuerten Werkzeugmaschine sind und zur Steuerung unterschiedlicher Komponenten der Werkzeugmaschine eingerichtet sind.

8. Datenschnittstellenvorrichtung (100) nach zumindest einem der Ansprüche 1 bis 6, **dadurch gekennzeichnet, dass**
die erste Steuervorrichtung Teil einer ersten und die zweite Steuervorrichtung Teil einer zweiten numerisch gesteuerten Werkzeugmaschine ist.

9. Datenschnittstellenvorrichtung (100) nach zumindest einem der Ansprüche 1 bis 8, **dadurch gekennzeichnet, dass**
die durch das Verarbeitungsmodul (30) generierten Konfigurationsdatensätze durch die jeweilige Steuervorrichtung (200a, 200b) ausführbare Installationsanweisungen enthalten.

10. Datenschnittstellenvorrichtung (100) zumindest nach Anspruch 9, **dadurch gekennzeichnet, dass**
die generierten Konfigurationsdatensätze zusätzliche eine elektronische Signatur enthalten.

11. Datenschnittstellenvorrichtung (100) nach zumindest einem der Ansprüche 1 bis 10, **dadurch gekennzeichnet, dass**
die Datenschnittstellenvorrichtung (100) weiterhin ein Eingabemodul (40) zum Erfassen von Nutzereingaben umfasst, über das insbesondere ein Aktualisierungsvorgang für ein Steuerungsprogramm einer Steuervorrichtung einleitbar ist.

12. Update-System zum Einsatz mit Werkzeugmaschinen, umfassend:
- zumindest eine Datenschnittstellenvorrichtung (100) nach einem der Ansprüche 1 bis 11;
- zumindest eine Steuerungsprogrammdatenbank (300), die über das erste Schnittstellenmodul (10) der Datenschnittstellenvorrichtung (100) mit dieser zur Datenübertragung gekoppelt ist.

13. Fertigungssystem, umfassend:
- zumindest ein Update-System nach Anspruch 12, und
- zumindest eine erste und eine zweite Steuervorrichtung (200a, 200b), die über das zweite Schnittstellenmodul (20) der Datenschnittstellenvorrichtung (100) des Update-Systems mit diesem zur Datenübertragung gekoppelt sind.

14. Verfahren zum Aktualisieren von Steuerungsprogrammen einer Steuervorrichtung (200a, 200b) einer numerisch gesteuerten Werkzeugmaschine, mittels einer Datenschnittstellenvorrichtung (100), umfassend die Schritte:
- Empfangen eines Aktualisierungsdatensatzes durch ein erstes Schnittstellenmodul (10) der Datenschnittstellenvorrichtung (100) von einer Steuerungsprogrammdatenbank;
- Auswählen zumindest einer zu aktualisierenden Steuervorrichtung (200a; 200b) aus einer Menge von zumindest zwei unterschiedlichen Steuervorrichtungen (200a, 200b);
- Generieren eines Konfigurationsdatensatzes für die ausgewählte Steuervorrichtung (200a; 200b), der diese dazu veranlasst, ein in einer Speichereinheit der ausgewählten Steuervorrichtung (200a; 200b) abgespeichertes Steuerungsprogramm zu aktualisieren, auf Basis des empfangenen Aktualisierungsdatensatzes durch ein Verarbeitungsmodul (30) der Datenschnittstellenvorrichtung (100);
- Übertragen des generierten Konfigurationsdatensatzes an die ausgewählte Steuervorrichtung (200a; 200b) mittels eines zweiten Schnittstellenmoduls (20) der Datenschnittstellenvorrichtung (100); und
- Aktualisieren des Steuerungsprogramms auf der ausgewählten Steuervorrichtung (200a; 200b) auf Basis des übertragenen Konfigurationsdatensatzes.

15. Verfahren zum Steuern einer numerisch gesteuerten Werkzeugmaschine, umfassend die Schritte:
- Aktualisieren eines Steuerungsprogramms einer Steuervorrichtung (200a, 200b), der numerisch gesteuerten Werkzeugmaschine mit einem Verfahren nach Anspruch 14;
- Steuern der Werkzeugmaschine mittels der Steuervorrichtung (200a, 200b) auf Basis des aktualisierten Steuerungsprogramms.
